# EUROPEAN PATENT SPECIFICATION

(11) **EP 4 085 726 B1**
(45) Date of publication and mention of the grant of the patent: **21.05.2025**
(21) Application number: 20838631.8
(22) Date of filing: 30.12.2020
(51) Int. Cl.: H04W 76/11, H04W 76/12, H04W 76/22, H04W 8/00, H04W 60/00

(54) **USING DNAI TO IDENTIFY A SMF SUPPORTING CONNECTION TO A LOCAL DN**
VERWENDUNG VON DNAI ZUR IDENTIFIZIERUNG EINER SMF ZUR UNTERSTÜTZUNG DER VERBINDUNG ZU EINEM LOKALEN DN
UTILISATION DE DNAI POUR IDENTIFIER UNE SMF PRENANT EN CHARGE UNE CONNEXION À UN DN LOCAL

(30) Priority: 30.12.2019 US 201962954846 P
(43) Date of publication of application: 09.11.2022
(73) Proprietor: Telefonaktiebolaget LM Ericsson (publ), 164 83 Stockholm (SE)
(72) Inventor: HALLENSTÅL, Magnus, 187 50 Täby (SE)
(74) Representative: Ericsson
(86) International application number: PCT/IB2020/062556
(87) International publication number: WO 2021/137180

(56) References cited:
- EP-A1- 3 720 160
- WO-A1-2019/158109
- CN-A- 110 167 003

## Description

### Related Applications

This application claims the benefit of provisional patent application serial number 62/954,846, filed December 30, 2019.

### Technical Field

The present disclosure relates to Edge computing, and more particularly to supporting connection to a local Data Network (DN).

### Background

The Third Generation Partnership Project (3GPP) Fifth Generation (5G) New Radio (NR) specification seeks to improve radio access to Data Networks (DNs), such as the internet, for larger numbers of User Equipment (UE) devices while reducing latency. In this regard, 3GPP SA2 is currently engaged in a study on Edge computing, which seeks to lower DN latency by locating computation and data storage closer to where it is needed. Edge computing promises to improve computation response times for distributed computing (e.g., cloud computing) and conserve bandwidth for DNs and access networks, such as a 5G System (5GS).

One of the key issues identified for supporting Edge computing in a 5GS, defined in 3GPP temporary document S2-1912616, is providing a mechanism to activate traffic routing towards a local DN. A use case is described where an Intermediate Session Management Function (I-SMF) is inserted because the current Session Management Function (SMF) or I-SMF serving a given UE does not support connection to a local DN. The use of I-SMF and how an I-SMF can be inserted or changed is specified in 3GPP Technical Specification (TS) 23.501 clause 5.34 and TS 23.502 clause 4.23. The UE with a subscription supporting connection to this DN will only connect to the local DN when it is in a certain area. A key functionality for gaining connection to a local DN is to use an Uplink Classifier (UL CL), as further described in 3GPP TS 23.501 clause 5.6.4.2

One existing solution for routing traffic towards a local DN is to use a Local Area DN (LADN) (see 23.501 clause 5.6.5), whereby the UE can establish a Protocol Data Unit (PDU) session while being in a certain area defined by the LADN.

There currently exist certain challenge(s). An LADN provides access to a DN via a PDU session, but is only available in a specific LADN service area. Accordingly, usage of LADN requires that UEs seeking access to the DN are configured to setup a PDU session for a given LADN, and that the network is configured with LADN service areas.

The document CN110167003A describes session management method, device and system. The document WO2019/158109A1 describes network element selection method and device.

### Summary

The invention is defined by the independent claims.

Using Data Network Access Identifier (DNAI) to identify a Session Management Function (SMF) supporting connection to a local Data Network (DN) is provided. In cases where a currently serving SMF does not support connection to a local DN, solutions proposed herein insert an Intermediate SMF (I-SMF) which supports connection to the local DN. An Access and Mobility Function (AMF) can identify the I-SMF to be inserted using DNAI.

There are, proposed herein, various embodiments which address one or more of the issues disclosed herein. In some embodiments, a method performed by an SMF for providing access to a DN is provided. The method comprises registering a Network Function (NF) profile for the SMF, the NF profile including a first DNAI that indicates that the SMF has access to a DN identified by the first DNAI.

In some embodiments, the first DNAI indicates that the SMF supports a User Plane Function (UPF) that supports access to the DN.

In some embodiments, the method further comprises receiving, from an AMF a message indicating selection of a second SMF using the first DNAI.

In some embodiments, the method further comprises receiving, from an AMF, a message that causes insertion of the SMF for an existing Protocol Data Unit (PDU) session, the message comprising the first DNAI. In some embodiments, the method further comprises selecting a UPF using the first DNAI. In some embodiments, the method further comprises performing one or more actions such that the SMF and the selected UPF are inserted for the existing PDU session. In some embodiments, performing the one or more actions comprises retrieving a Session Management (SM) context for the existing PDU Session from a second SMF controlling the PDU session. In some embodiments, performing the one or more actions further comprises receiving the SM context from the second SMF controlling the PDU session. In some embodiments, the existing PDU session is associated with a second DNAI that identifies a second DN.

In some embodiments, the DN is a local DN.

In some embodiments, a method performed by an SMF for supporting connection to a DN is provided. The method comprises obtaining a Policy Control Function (PCF) rule to use a DN identified by a first DNAI for some or all traffic when a User Equipment (UE) is in an area of interest. The method further comprises receiving a notification that a particular UE having an existing PDU session is in the area of interest. Upon receiving the notification that the particular UE is in the area of interest, the method further comprises notifying an AMF that the SMF does not support the first DNAI, thereby triggering insertion of an I-SMF that supports access to the first DNAI into the existing PDU session of the UE.

In some embodiments, the method further comprises determining that the SMF does not support the first DNAI.

In some embodiments, the method further comprises obtaining information that the particular UE is subject to the PCF rule.

In some embodiments, the method further comprises subscribing to event reporting from the AMF for the area of interest for the particular UE, wherein receiving the notification that the particular UE is in the area of interest comprises receiving the notification responsive to subscribing to event reporting from the AMF for the area of interest for the particular UE.

In some embodiments, the SMF is an SMF of a Fifth Generation Core (5GC).

In some embodiments, a method performed by an AMF for identifying an SMF with access to a DN is provided. The method comprises receiving a notification from a first SMF controlling a PDU session of a UE that the first SMF does not support a DNAI desired for the PDU session. The method further comprises discovering a second SMF supporting the DNAI.

In some embodiments, the method further comprises notifying the first SMF controlling the PDU session of the UE that the UE is in an area of interest in which a DN identified by the DNAI is to be used for some or all traffic of the UE.

In some embodiments, discovering the second SMF supporting the DNAI comprises querying a Network Function Repository Function (NRF) for an SMF that supports the DNAI.

In some embodiments, the method further comprises selecting the second SMF supporting the DNAI as an I-SMF for the PDU session. In some embodiments, the method further comprises, in response to selecting the I-SMF, requesting a SM context for the PDU session.

In some embodiments, the AMF is an AMF of a 5GC.

In some embodiments, a network node in a communications system is provided. The network node is configured to perform the method of any of the above embodiments. In some embodiments, the network node further comprises a communication interface and processing circuitry configured to perform the method of any of the above embodiments.

Certain embodiments may provide a technical advantage, whereby an SMF requires less configuration while facilitating access to DNs.

### Brief Description of the Drawings

The accompanying drawing figures incorporated in and forming a part of this specification illustrate several aspects of the disclosure, and together with the description serve to explain the principles of the disclosure.
Figure 1 illustrates one example of a cellular communications system in which embodiments of the present disclosure may be implemented.
Figure 2 illustrates a core network represented as a Fifth Generation (5G) network architecture composed of core Network Functions (NFs), where interaction between any two NFs is represented by a point-to-point reference point/interface.
Figure 3 illustrates a 5G network architecture using service-based interfaces between the NFs in the control plane, instead of the point-to-point reference points/interfaces used in the 5G network architecture of Figure 2.
Figure 4A is a schematic diagram of an example of the core network of Figure 2 in which a User Equipment (UE) is connected to a first Data Network (DN1) over a Protocol Data Unit (PDU) session.
Figure 4B is a schematic diagram of the core network of Figure 4A, illustrating insertion of an intermediate Session Management Function (I-SMF) and Intermediate User Plane Function (I-UPF) supporting access to the local Data Network (DN) according to embodiments disclosed herein.
Figure 5A is a schematic diagram of an example of the core network of Figure 2 in which the UE in a first region is connected to DN1 in a second region over a PDU session via a first I-SMF (I-SMF1)/first I-UPF (I-UPF1).
Figure 5B is a schematic diagram of the core network of Figure 5A, illustrating replacement of I-SMF1/I-UPF1 with a second I-SMF (I-SMF2)/second I-UPF (I-UPF2) supporting access to the local DN according to embodiments disclosed herein.
Figure 6 is a schematic diagram of an example of the core network of Figure 2 in which the UE in a first region is connected to DN1 in a second region over a PDU session via I-SMF1/I-UPF1.
Figure 7 is a flow diagram illustrating identifying and inserting an I-SMF which supports access to a desired DN (e.g., local DN1) according to embodiments disclosed herein.
Figure 8 is a schematic block diagram of a network node according to some embodiments of the present disclosure.
Figure 9 is a schematic block diagram that illustrates a virtualized embodiment of the network node according to some embodiments of the present disclosure.
Figure 10 is a schematic block diagram of the network node according to some other embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

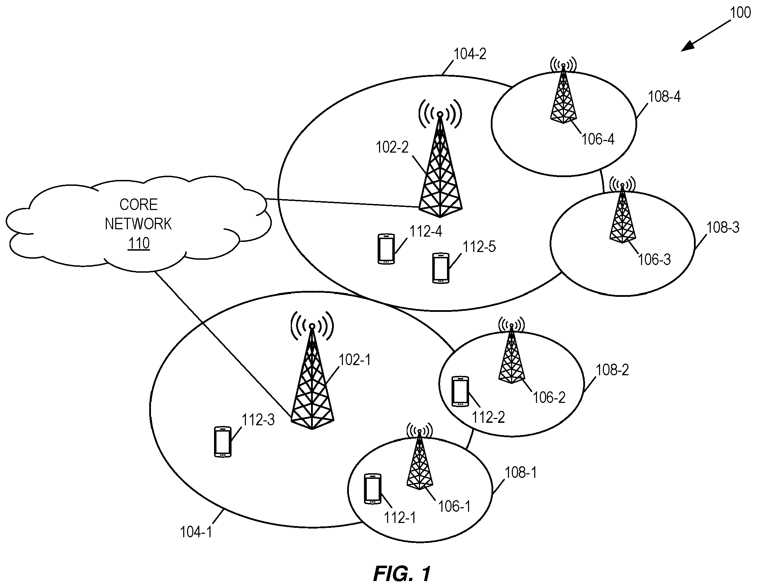

Figure 1 illustrates one example of a cellular communications system 100 in which embodiments of the present disclosure may be implemented. In the embodiments described herein, the cellular communications system 100 is a 5G System (5GS) including a NR RAN or LTE RAN (i.e., E-UTRA RAN). In this example, the RAN includes base stations 102-1 and 102-2, which in 5G NR are referred to as gNBs (e.g., LTE RAN nodes connected to 5GC, which are referred to as gn-eNBs), controlling corresponding (macro) cells 104-1 and 104-2. The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The RAN may also include a number of low power nodes 106-1 through 106-4 controlling corresponding small cells 108-1 through 108-4. The low power nodes 106-1 through 106-4 can be small base stations (such as pico or femto base stations) or Remote Radio Heads (RRHs), or the like. Notably, while not illustrated, one or more of the small cells 108-1 through 108-4 may alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The cellular communications system 100 also includes a core network 110, which in the 5GS is referred to as the 5G Core (5GC). The base stations 102 (and optionally the low power nodes 106) are connected to the core network 110.

The base stations 102 and the low power nodes 106 provide service to wireless communication devices 112-1 through 112-5 in the corresponding cells 104 and 108. The wireless communication devices 112-1 through 112-5 are generally referred to herein collectively as wireless communication devices 112 and individually as wireless communication device 112. In the following description, the wireless communication devices 112 are oftentimes UEs, but the present disclosure is not limited thereto.

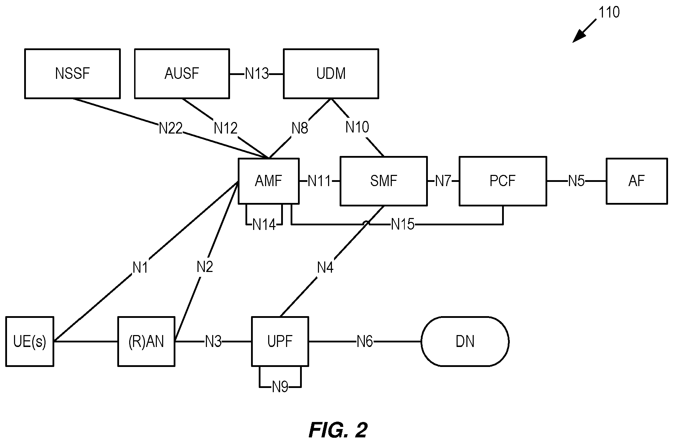

Figure 2 illustrates a core network 110 represented as a 5G network architecture composed of core Network Functions (NFs), where interaction between any two NFs is represented by a point-to-point reference point/interface. Figure 2 can be viewed as one particular implementation of the system 100 of Figure 1.

Seen from the access side the 5G network architecture shown in Figure 2 comprises a plurality of UEs connected to either a RAN or an Access Network (AN) as well as an AMF. Typically, the (R)AN comprises base stations, e.g., such as eNBs or gNBs or similar. Seen from the core network side, the 5GC NFs shown in Figure 2 include a NSSF, an AUSF, a UDM, an AMF, a SMF, a PCF, and an Application Function (AF).

Reference point representations of the 5G network architecture are used to develop detailed call flows in the normative standardization. The N1 reference point is defined to carry signaling between the UE and AMF. The reference points for connecting between the (R)AN and AMF and between the (R)AN and UPF are defined as N2 and N3, respectively. There is a reference point, N11, between the AMF and SMF, which implies that the SMF is at least partly controlled by the AMF. N4 is used by the SMF and UPF so that the UPF can be set using the control signal generated by the SMF, and the UPF can report its state to the SMF. N9 is the reference point for the connection between different UPFs, and N14 is the reference point connecting between different AMFs, respectively. N15 and N7 are defined since the PCF applies policy to the AMF and SMF, respectively. N12 is required for the AMF to perform authentication of the UE. N8 and N10 are defined because the subscription data of the UE is required for the AMF and SMF.

The 5GC network aims at separating user plane and control plane. The user plane carries user traffic while the control plane carries signaling in the network. In Figure 2, the UPF is in the user plane and all other NFs, i.e., the AMF, SMF, PCF, AF, AUSF, and UDM, are in the control plane. Separating the user and control planes guarantees each plane resource to be scaled independently. It also allows UPFs to be deployed separately from control plane functions in a distributed fashion. In this architecture, UPFs may be deployed very close to UEs to shorten the Round Trip Time (RTT) between UEs and a Data Network (DN) for some applications requiring low latency.

The 5GC network architecture is composed of modularized functions. For example, the AMF and SMF are independent functions in the control plane. Separated AMF and SMF allow independent evolution and scaling. Other control plane functions like the PCF and AUSF can be separated as shown in Figure 2. Modularized function design enables the 5GC network to support various services flexibly.

Each NF interacts with another NF directly. It is possible to use intermediate functions to route messages from one NF to another NF. In the control plane, a set of interactions between two NFs is defined as service so that its reuse is possible. This service enables support for modularity. The user plane supports interactions such as forwarding operations between different UPFs.

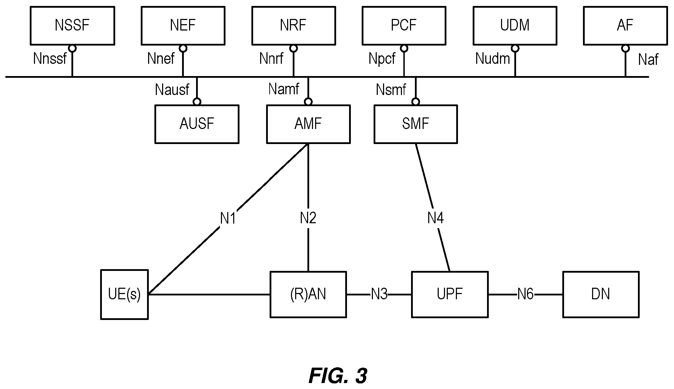

Figure 3 illustrates a 5G network architecture using service-based interfaces between the NFs in the control plane, instead of the point-to-point reference points/interfaces used in the 5G network architecture of Figure 2. However, the NFs described above with reference to Figure 2 correspond to the NFs shown in Figure 3. The service(s) etc. that a NF provides to other authorized NFs can be exposed to the authorized NFs through the service-based interface. In Figure 3 the service-based interfaces are indicated by the letter "N" followed by the name of the NF, e.g., Namf for the service based interface of the AMF and Nsmf for the service based interface of the SMF etc. The Network Exposure Function (NEF) and the Network Function (NF) Repository Function (NRF) in Figure 3 are not shown in Figure 2 discussed above. However, it should be clarified that all NFs depicted in Figure 2 can interact with the NEF and the NRF of Figure 3 as necessary, though not explicitly indicated in Figure 2.

Some properties of the NFs shown in Figures 2 and 3 may be described in the following manner. The AMF provides UE-based authentication, authorization, mobility management, etc. A UE even using multiple access technologies is basically connected to a single AMF because the AMF is independent of the access technologies. The SMF is responsible for session management and allocates Internet Protocol (IP) addresses to UEs. It also selects and controls the UPF for data transfer. If a UE has multiple sessions, different SMFs may be allocated to each session to manage them individually and possibly provide different functionalities per session. The AF provides information on the packet flow to the PCF responsible for policy control in order to support Quality of Service (QoS). Based on the information, the PCF determines policies about mobility and session management to make the AMF and SMF operate properly. The AUSF supports authentication function for UEs or similar and thus stores data for authentication of UEs or similar while the UDM stores subscription data of the UE. The DN, not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

Embodiments described herein use a Data Network Access Identifier (DNAI) to identify a SMF supporting connection to a local DN. In cases where a currently serving SMF does not support connection to a local DN, solutions proposed herein insert an Intermediate SMF (I-SMF) which supports connection to the local DN. An AMF can identify the I-SMF to be inserted using DNAI.

In this regard, a NF (e.g., SMF, AMF) in a 5GC registers its NF metadata to a NRF. The NF metadata is stored in a NF profile of the NF. This allows other NFs to discover a given NF. Embodiments described herein add a new data element in the NF profile of the SMF. This new data element is a DNAI (or list of DNAIs) supported by the SMF. A DNAI names certain access (e.g., interfaces) supported by a UPF. If a UPF supports registration of itself, it can register its supported DNAIs. However, in this case, this information is also added to the NF profile for the SMF. Thus, when an SMF sees that a local connection to a DN is needed, but it does not itself have access to the DNAI associated with the local DN, the SMF triggers the AMF to insert an I-SMF by sending the DNAI to the AMF. The AMF can then discover and select an I-SMF supporting the DNAI.

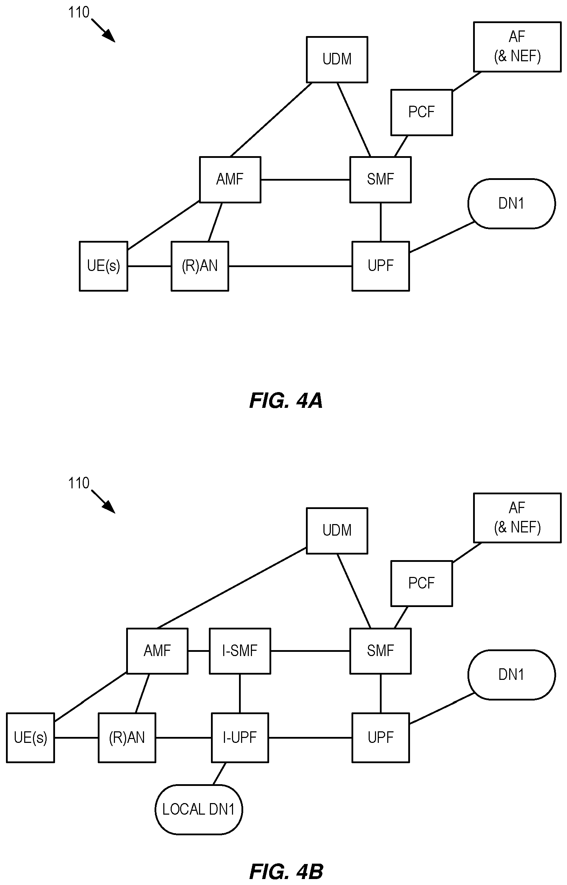

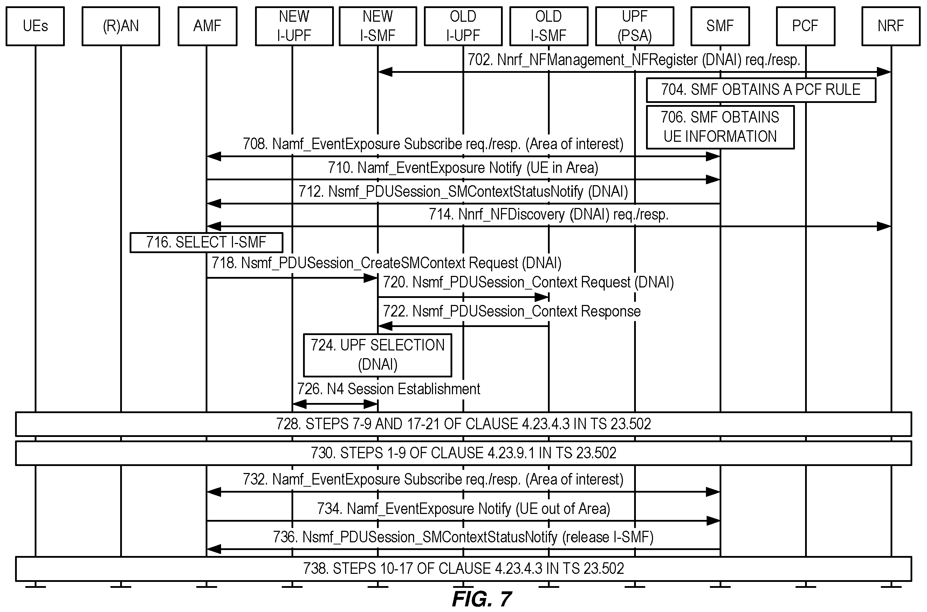

Figures 4A-6 illustrate using a DNAI to identify a SMF supporting connection to a local DN and inserting the identified SMF as an I-SMF. The procedure for inserting the I-SMF (and an Intermediate UPF (I-UPF)) supporting access to the local DN is illustrated further below with respect to Figure 7.

Figure 4A is a schematic diagram of an example of the core network 110 of Figure 2 in which a UE is connected to a first DN (DN1) over a Protocol Data Unit (PDU) session. In an exemplary aspect, the SMF registers its NF metadata to the NRF, which is stored in an NF profile of the SMF. Embodiments described herein add the DNAI(s) supported by the SMF to the NF profile of the SMF. This DNAI(s) indicates the DN access supported by the UPF controlled by the SMF (e.g., even where the UPF is self-registering). Accordingly, the other NFs in the 5GC can see, via the NF profile of the SMF, which DNAIs the SMF can access (e.g., via the UPF controlled by the SMF).

In the illustrated embodiment, the UE enters a certain area which triggers the network to connect to a local DN (which may be a local instance of DN1) by means of an Uplink Classifier (UL CL). The SMF controlling the PDU session sees that it does not have access to the UPF identified by the DNAI that has access to the local DN, and, as such, the SMF triggers insertion of an I-SMF that controls the UPF supporting the wanted DNAI.

Figure 4B is a schematic diagram of the core network 110 of Figure 4A, illustrating insertion of an I-SMF and I-UPF supporting access to the local DN according to embodiments disclosed herein. The insertion of the I-SMF can also be done at PDU session establishment, i.e., regardless of where the UE is. The insertion of the UL CL can be done at PDU session establishment or mid-session (e.g., when a UE enters a certain area).

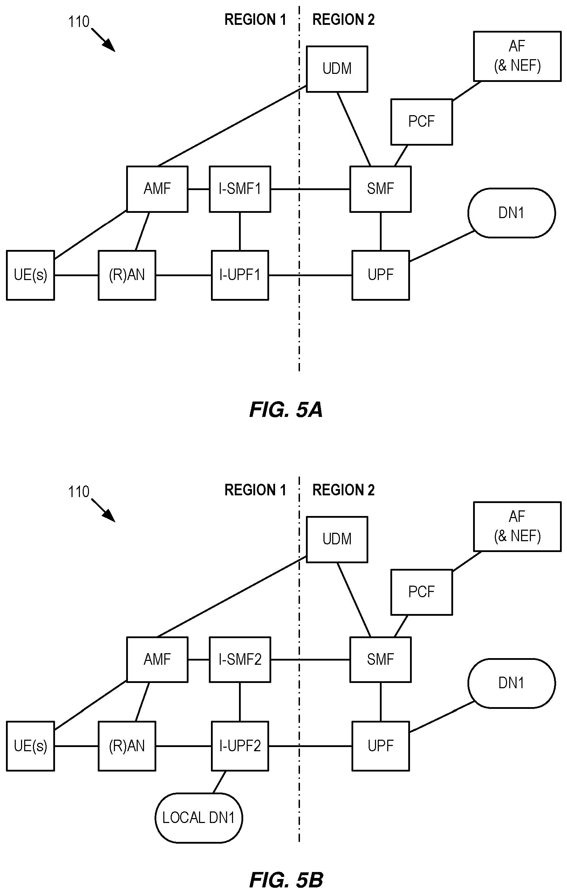

Figure 5A is a schematic diagram of an example of the core network 110 of Figure 2 in which the UE in a first region is connected to DN1 in a second region over a PDU session via a first I-SMF (I-SMF1)/first I-UPF (I-UPF1). Figure 5B is a schematic diagram of the core network 110 of Figure 5A, illustrating replacement of I-SMF1/I-UPF1 with a second I-SMF (I-SMF2)/second I-UPF (I-UPF2) supporting access to the local DN according to embodiments disclosed herein.

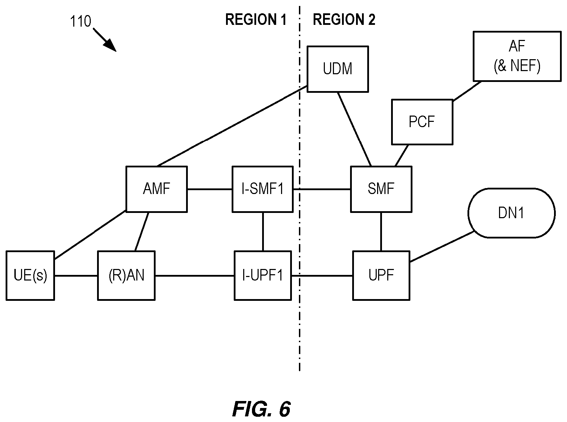

Figure 6 is a schematic diagram of an example of the core network 110 of Figure 2 in which the UE in a first region is connected to DN1 in a second region over a PDU session via I-SMF1/I-UPF1.

Figure 7 is a flow diagram illustrating identifying and inserting an I-SMF which supports access to a desired DN (e.g., local DN1) according to embodiments disclosed herein. At step 702, the I-SMF (e.g., new I-SMF) registers its NF profile, which includes DNAI(s) via Nnrf_NFManagement_NFRegister request and response. At step 704, the SMF has obtained a PCF rule that, when a UE is in a certain area (e.g., an area of interest), a specific DNAI is to be used for some or all traffic (e.g., if a UE is in the certain area, UL-CL is inserted and a local PDU Session Anchor (PSA)). At step 706, the SMF has by some means obtained information that a particular UE is subject to the PCF rule (e.g., needs access to the local PSA) using UL CL if in the area of interest.

At step 708, the SMF subscribes to event reporting from the AMF for the UE's presence in the area of interest via Namf_EvenExposure_Subscribe request and response. At step 710, the AMF notifies the SMF of the UE's presence in the area of interest via Namf_EventExposure_Notify. At step 712, the SMF sees that it does not support the DNAI to be used for some or all traffic when the UE is in the area of interest (i.e., the SMF sees that it does not have access to the UPF identified by the DNAI that has access to the local DN), and the SMF sends a NSmf_PDUSession_SMContextStatusNotify to the AMF, where the NSmf_PDUSession_SMContextStatusNotify is updated to also include a notification to the AMF that an I-SMF supporting a specific DNAI is to be included (i.e., inserted).

At step 714, the AMF discovers the new I-SMF using the DNAI as one of the query parameters sent to the NRF via Nnrf_NFDiscovery request and receiving the respective response. At step 716, the AMF selects the new I-SMF, which has access to the local DN for the PDU session. The AMF then initiates a procedure for inserting the new I-SMF into the existing PDU session. More specifically, in this example at step 718, the AMF requests a Session Management (SM) context using the DNAI from the new I-SMF via Nsmf_PDUSession_CreateSMContext Request. In the case of an I-SMF change (e.g., as illustrated in Figures 5A and 5B), the request includes an SM Context Identifier (ID) which points to the old I-SMF.

At step 720, the new I-SMF retrieves the SM Context from the old I-SMF (in cases of I-SMF change) or SMF (in cases of I-SMF insertion) using the DNAI by invoking Nsmf_PDUSession_Context Request (SM context type, SM Context ID). The SM Context ID is used by the recipient of Nsmf_PDUSession_Context Request in order to determine the targeted PDU Session. At step 722, the SMF/old I-SMF responds with the SM context of the indicated PDU Session.

At step 724, the new I-SMF selects a new I-UPF based on the DNAI. That is, the new I-SMF selects a new I-UPF which has access to the local DN, indicated by the DNAI. The new I-SMF then performs actions such that the SMF and the selected UPF are inserted for the existing PDU session. More specifically, in this example at step 726, the new I-SMF initiates a N4 Session Establishment to the new I-UPF.

At step 728, steps 7-9 and 17-21 of clause 4.23.4.3 in 3GPP Technical Specification (TS) 23.502 are performed (e.g., inserting the new I-SMF as an I-SMF for the PDU Session). At step 730, steps 1-9 of clause 4.23.9.1 in 3GPP TS 23.502 are performed.

At step 732, the SMF subscribes to event reporting from the AMF for the UE's presence in the area of interest via Namf_EvenExposure_Subscribe request and response. At step 734, the AMF notifies the SMF that the UE is out of the area of interest via Namf_EventExposure_Notify. At step 736, the SMF releases the new I-SMF via NSmf_PDUSession_SMContextStatusNotify. At step 738, steps 10-17 of clause 4.23.4.3 in 3GPP TS 23.502 are performed.

It should be understood that the steps described with respect to Figure 7 can be modified as needed for particular scenarios, such as those illustrated in Figures 4A-6. For example, in the scenario of Figures 5A and 5B, the old I-SMF (I-SMF1) and I-UPF (I-UPF1) can be removed with the insertion of the new I-SMF (I-SMF2) and new I-UPF (I-UPF2), such as described further in 3GPP TS 23.502 clause 4.23.

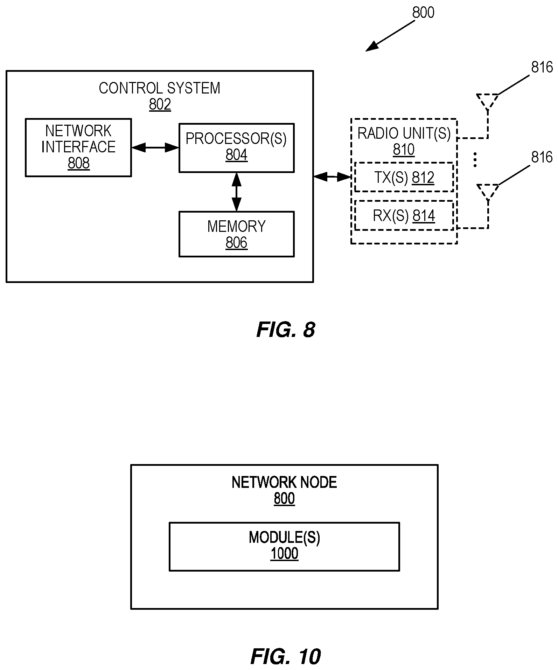

Figure 8 is a schematic block diagram of a network node 800 according to some embodiments of the present disclosure. Optional features are represented by dashed boxes. The network node 800 may be, for example, a core network node (e.g., a MME), a network node that implements a core network function (e.g., an AMF), or a radio access node (e.g., the base station 102 or 106) that implements all or part of the functionality of a network node (e.g., a base station, an AMF, an SMF, etc.) described herein. As illustrated, the network node 800 includes a control system 802 that includes one or more processors 804 (e.g., Central Processing Units (CPUs), Application Specific Integrated Circuits (ASICs), Field Programmable Gate Arrays (FPGAs), and/or the like), memory 806, and a network interface 808. The one or more processors 804 are also referred to herein as processing circuitry. In addition, if the network node 800 is a radio access node, the network node 800 may include one or more radio units 810 that each includes one or more transmitters 812 and one or more receivers 814 coupled to one or more antennas 816. The radio units 810 may be referred to or be part of radio interface circuitry. In some embodiments, the radio unit(s) 810 is external to the control system 802 and connected to the control system 802 via, e.g., a wired connection (e.g., an optical cable). However, in some other embodiments, the radio unit(s) 810 and potentially the antenna(s) 816 are integrated together with the control system 802. The one or more processors 804 operate to provide one or more functions of a network node 800 as described herein (e.g., one or more functions of a base station, a MME, an AMF, an SMF, etc. described herein, e.g., with respect to Figures 4A-7). In some embodiments, the function(s) are implemented in software that is stored, e.g., in the memory 806 and executed by the one or more processors 804.

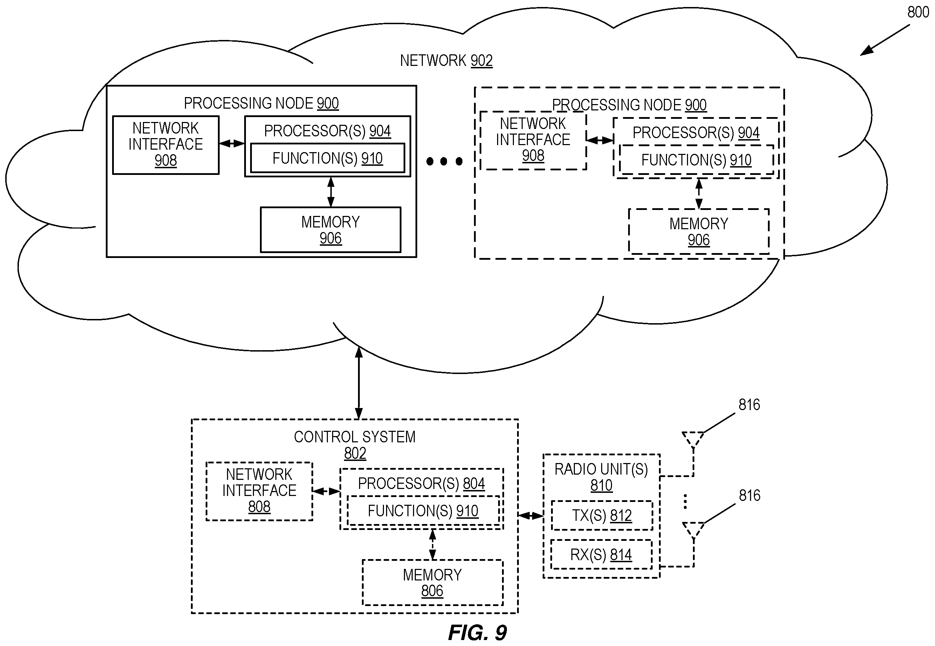

Figure 9 is a schematic block diagram that illustrates a virtualized embodiment of the network node 800 according to some embodiments of the present disclosure. As used herein, a "virtualized" network node is an implementation of the network node 800 in which at least a portion of the functionality of the network node 800 is implemented as a virtual component(s) (e.g., via a virtual machine(s) executing on a physical processing node(s) in a network(s)). As illustrated, in this example, the radio access node 800 includes one or more processing nodes 900 coupled to or included as part of a network(s) 902. Each processing node 900 includes one or more processors 904 (e.g., CPUs, ASICs, FPGAs, and/or the like), memory 906, and a network interface 908. If the network node 800 is a radio access node, the network node 800 may also include the control system 802 and/or the one or more radio units 810, as described above. The control system 802 may be connected to the radio unit(s) 810 via, for example, an optical cable or the like. If present, the control system 802 or the radio unit(s) 810 are connected to the processing node(s) 900 via the network 902.

In this example, functions 910 of the network node 800 described herein (e.g., one or more functions of a base station, an AMF, an SMF, etc. described herein, e.g., with respect to Figures 4A-7) are implemented at the one or more processing nodes 900 or distributed across the one or more processing nodes 900 and the control system 802 and/or the radio unit(s) 810 in any desired manner. In some particular embodiments, some or all of the functions 910 of the network node 800 described herein are implemented as virtual components executed by one or more virtual machines implemented in a virtual environment(s) hosted by the processing node(s) 900. As will be appreciated by one of ordinary skill in the art, additional signaling or communication between the processing node(s) 900 and the control system 802 is used in order to carry out at least some of the desired functions 910. Notably, in some embodiments, the control system 802 may not be included, in which case the radio unit(s) 810 communicate directly with the processing node(s) 900 via an appropriate network interface(s).

In some embodiments, a computer program including instructions which, when executed by at least one processor, causes the at least one processor to carry out the functionality of network node 800 or a node (e.g., a processing node 900) implementing one or more of the functions 910 of the network node 800 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 10 is a schematic block diagram of the network node 800 according to some other embodiments of the present disclosure. The network node 800 includes one or more modules 1000, each of which is implemented in software. The module(s) 1000 provide the functionality of the network node 800 described herein (e.g., one or more functions of a base station, an AMF, an SMF, etc. described herein, e.g., with respect to Figures 4A-7). This discussion is equally applicable to the processing node 900 of Figure 9 where the modules 1000 may be implemented at one of the processing nodes 900 or distributed across multiple processing nodes 900 and/or distributed across the processing node(s) 900 and the control system 802.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • 5GS | Fifth Generation System |
| • AF | Application Function |
| • AMF | Access and Mobility Function |
| • AN | Access Network |
| • ASIC | Application Specific Integrated Circuit |
| • AUSF | Authentication Server Function |
| • CPU | Central Processing Unit |
| • DN | Data Network |
| • DNAI | Data Network Access Identifier |
| • DSP | Digital Signal Processor |
| • eNB | Enhanced or Evolved Node B |
| • E-UTRA | Evolved Universal Terrestrial Radio Access |
| • FPGA | Field Programmable Gate Array |
| • gNB | New Radio Base Station |
| • gNB-CU | New Radio Base Station Central Unit |
| • gNB-DU | New Radio Base Station Distributed Unit |
| • HSS | Home Subscriber Server |
| • ID | Identifier |
| • IoT | Internet of Things |
| • IP | Internet Protocol |
| • I-SMF | Intermediate Session Management Function |
| • I-UPF | Intermediate User Plane Function |
| • LADN | Local Area Data Network |
| • LTE | Long Term Evolution |
| • MME | Mobility Management Entity |
| • MTC | Machine Type Communication |
| • NEF | Network Exposure Function |
| • NF | Network Function |
| • NR | New Radio |
| • NRF | Network Function Repository Function |
| • NSSF | Network Slice Selection Function |
| • PC | Personal Computer |
| • PCF | Policy Control Function |
| • PDU | Protocol Data Unit |
| • P-GW | Packet Data Network Gateway |
| • PSA | Protocol Data Unit Session Anchor |
| • QoS | Quality of Service |
| • RAM | Random Access Memory |
| • RAN | Radio Access Network |
| • ROM | Read Only Memory |
| • RRH | Remote Radio Head |
| • RTT | Round Trip Time |
| • SCEF | Service Capability Exposure Function |
| • SM | Session Management |
| • SMF | Session Management Function |
| • TS | Technical Specification |
| • UDM | Unified Data Management |
| • UE | User Equipment |
| • UL CL | Uplink Classifier |
| • UPF | User Plane Function |

Those skilled in the art will recognize improvements and modifications to the embodiments of the present disclosure. All such improvements and modifications are considered within the scope of the concepts disclosed herein.

## Claims

1. A method performed by a Session Management Function, SMF, for providing access to a Data Network, DN, the method comprising:
- registering (702) a Network Function, NF, profile for the SMF, the NF profile including a first DN Access Identifier, DNAI, that indicates that the SMF has access to a DN identified by the first DNAI.

2. The method of claim 1 wherein the first DNAI indicates that the SMF supports a User Plane Function, UPF, that supports access to the DN.

3. The method of any of claims 1 to 2 further comprising receiving (718), from an Access and Mobility Function, AMF, a message that causes insertion of the SMF for an existing Protocol Data Unit, PDU, session, the message comprising the first DNAI and, optionally,
the method further comprising selecting (724) a User Plane Function, UPF, using the first DNAI and, optionally,
the method further comprising performing one or more actions such that the SMF and the selected UPF are inserted for the existing PDU session and, optionally,
wherein performing the one or more actions comprises retrieving (720) a Session Management, SM, context for the existing PDU Session from a second SMF controlling the PDU session.

4. The method of claim 3 wherein performing the one or more actions further comprises receiving (722) the SM context from the second SMF controlling the PDU session.

5. The method of claim 3 wherein the existing PDU session is associated with a second DNAI that identifies a second DN.

6. The method of any of claims 1 to 5 wherein the DN is a local DN.

7. A method performed by a Session Management Function, SMF, for supporting connection to a Data Network, DN, the method comprising:
- obtaining (704) a Policy Control Function, PCF, rule to use a DN identified by a first DN Access Identifier, DNAI, for some or all traffic when a User Equipment, UE, is in an area of interest;
- receiving (708) a notification that a particular UE having an existing Protocol Data Unit, PDU, session is in the area of interest; and
- upon receiving (708) the notification that the particular UE is in the area of interest, notifying (712) an Access and Mobility Function, AMF, that the SMF does not support the first DNAI, thereby triggering insertion of an Intermediate SMF, I-SMF, that supports access to the first DNAI into the existing PDU session of the UE.

8. The method of claim 7 further comprising determining (712) that the SMF does not support the first DNAI and/or
the method further comprising obtaining (706) information that the particular UE is subject to the PCF rule and/or
the method further comprising subscribing (708) to event reporting from the AMF for the area of interest for the particular UE, wherein receiving (708) the notification that the particular UE is in the area of interest comprises receiving (708) the notification responsive to subscribing (708) to event reporting from the AMF for the area of interest for the particular UE.

9. The method of any of claims 1 to 8 wherein the SMF is an SMF of a Fifth Generation Core, 5GC.

10. A method performed by an Access and Mobility Function, AMF, for identifying a Session Management Function, SMF, with access to a Data Network, DN, the method comprising:
- receiving (712) a notification from a first SMF controlling a Protocol Data Unit, PDU, session of a User Equipment, UE, that the first SMF does not support a DN Access Identifier, DNAI, desired for the PDU session; and
- discovering (714) a second SMF supporting the DNAI.

11. The method of claim 10 further comprising notifying (710) the first SMF controlling the PDU session of the UE that the UE is in an area of interest in which a DN identified by the DNAI is to be used for some or all traffic of the UE and/or
wherein discovering (714) the second SMF supporting the DNAI comprises querying a Network Function Repository Function, NRF, for an SMF that supports the DNAI.

12. The method of claim 10 or 11 further comprising selecting (716) the second SMF supporting the DNAI as an intermediate SMF, I-SMF, for the PDU session and, optionally,
the method further comprising, in response to selecting (716) the I-SMF, requesting a Session Management, SM, context for the PDU session.

13. The method of any of claims 10 to 12 wherein the AMF is an AMF of a Fifth Generation Core, 5GC.

14. A network node in a communications system (100), the network node configured to perform the method of any of claims 1 to 13.

15. The network node of claim 14 further comprising:
- a communication interface; and
processing circuitry configured to perform the method of any of claims 1 to 13.

## Patentansprüche

1. Verfahren, das durch eine Sitzungsverwaltungsfunktion, SMF, durchgeführt wird, zum Bereitstellen von Zugriff auf ein Datennetzwerk, DN, wobei das Verfahren Folgendes umfasst:
- Registrieren (702) eines Netzwerkfunktionsprofils, NF-Profils, für die SMF, wobei das NF-Profil eine erste DN-Zugriffskennung, DNAI, beinhaltet, die angibt, dass die SMF über Zugriff auf ein durch die erste DNAI identifiziertes DN verfügt.

2. Verfahren nach Anspruch 1, wobei die erste DNAI angibt, dass die SMF eine Benutzerebenenfunktion, UPF, unterstützt, die den Zugriff auf das DN unterstützt.

3. Verfahren nach einem der Ansprüche 1 bis 2, ferner umfassend Empfangen (718), von einer Zugriffs- und Mobilitätsfunktion, AMF, einer Nachricht, die eine Einfügung der SMF für eine bestehende Sitzung einer Protokolldateneinheit, PDU-Sitzung, bewirkt, wobei die Nachricht die erste DNAI umfasst und optional
das Verfahren ferner Auswählen (724) einer Benutzerebenenfunktion, UPF, unter Verwendung der ersten DNAI umfasst und optional
das Verfahren ferner Durchführen einer oder mehrerer Handlungen umfasst, sodass die SMF und die ausgewählte UPF für die bestehende PDU-Sitzung eingefügt werden, und optional
wobei das Durchführen der einen oder der mehreren Handlungen Abrufen (720) eines Sitzungsverwaltungskontextes, SM-Kontextes, für die bestehende PDU-Sitzung aus einer zweiten SMF, die die PDU-Sitzung steuert, umfasst.

4. Verfahren nach Anspruch 3, wobei das Durchführen der einen oder der mehreren Handlungen ferner Empfangen (722) des SM-Kontextes von der zweiten SMF, die die PDU-Sitzung steuert, umfasst.

5. Verfahren nach Anspruch 3, wobei die bestehende PDU-Sitzung mit einer zweiten DNAI assoziiert ist, die ein zweites DN identifiziert.

6. Verfahren nach einem der Ansprüche 1 bis 5, wobei das DN ein lokales DN ist.

7. Verfahren, das durch eine Sitzungsverwaltungsfunktion, SMF, durchgeführt wird, zum Unterstützen einer Verbindung mit einem Datennetzwerk, DN, wobei das Verfahren Folgendes umfasst:
- Erlangen (704) einer Richtliniensteuerfunktionsregel, PCF-Regel, zum Verwenden eines durch eine erste DN-Zugriffskennung, DNAI, identifizierten DN für einen Teil oder die Gesamtheit des Datenverkehrs, wenn sich ein Benutzergerät, UE, in einem Bereich von Interesse befindet;
- Empfangen (708) einer Benachrichtigung, dass sich ein konkretes UE, das eine bestehende Sitzung einer Protokolldateneinheit, PDU-Sitzung, aufweist, in dem Bereich von Interesse befindet; und
- nach dem Empfangen (708) der Benachrichtigung, dass sich das konkrete UE in dem Bereich von Interesse befindet, Benachrichtigen (712) einer Zugriffs- und Mobilitätsfunktion, AMF, dass die SMF die erste DNAI nicht unterstützt, wodurch eine Einfügung einer intermediären SMF, I-SMF, die einen Zugriff auf die erste DNAI unterstützt, in die bestehende PDU-Sitzung des UE ausgelöst wird.

8. Verfahren nach Anspruch 7, ferner umfassend Bestimmen (712), dass die SMF die erste DNAI nicht unterstützt, und/oder
wobei das Verfahren ferner Erlangen (706) von Informationen, dass das konkrete UE der PCF-Regel unterworfen ist, umfasst und/oder
wobei das Verfahren ferner Abonnieren (708) einer Ereignismeldung von der AMF für den Bereich von Interesse für das konkrete UE umfasst, wobei das Empfangen (708) der Benachrichtigung, dass sich das konkrete UE in dem Bereich von Interesse befindet, Empfangen (708) der Benachrichtigung als Reaktion auf das Abonnieren (708) der Ereignismeldung von der AMF für den Bereich von Interesse für das konkrete UE umfasst.

9. Verfahren nach einem der Ansprüche 1 bis 8, wobei die SMF eine SMF eines Cores der fünften Generation, 5GC, ist.

10. Verfahren, das durch eine Zugriffs- und Mobilitätsfunktion, AMF, durchgeführt wird, zum Identifizieren einer Sitzungsverwaltungsfunktion, SMF, mit Zugriff auf ein Datennetzwerk, DN, wobei das Verfahren Folgendes umfasst:
- Empfangen (712) einer Benachrichtigung von einer ersten SMF, die eine Sitzung einer Protokolldateneinheit, PDU-Sitzung, eines Benutzergerätes, UE, steuert, dass die erste SMF eine für die PDU-Sitzung gewünschte DN-Zugriffskennung, DNAI, nicht unterstützt; und
- Auffinden (714) einer zweiten SMF, die die DNAI unterstützt.

11. Verfahren nach Anspruch 10, ferner umfassend Benachrichtigen (710) der ersten SMF, die die PDU-Sitzung des UE steuert, dass sich das UE in einem Bereich von Interesse befindet, in dem ein durch die DNAI identifiziertes DN für einen Teil oder die Gesamtheit des Datenverkehrs des UE zu verwenden ist, und/oder
wobei das Auffinden (714) der zweiten SMF, die die DNAI unterstützt, Abfragen einer Netzwerkfunktionsregisterfunktion, NRF, für eine SMF, die die DNAI unterstützt, umfasst.

12. Verfahren nach Anspruch 10 oder 11, ferner umfassend Auswählen (716) der zweiten SMF, die die DNAI unterstützt, als intermediäre SMF, I-SMF, für die PDU-Sitzung und optional
wobei das Verfahren ferner als Reaktion auf das Auswählen (716) der I-SMF Anfordern eines Sitzungsverwaltungskontextes, SM-Kontextes, für die PDU-Sitzung umfasst.

13. Verfahren nach einem der Ansprüche 10 bis 12, wobei die AMF eine AMF eines Cores der fünften Generation, 5GC, ist.

14. Netzwerkknoten in einem Kommunikationssystem (100), wobei der Netzwerkknoten dazu konfiguriert ist, das Verfahren nach einem der Ansprüche 1 bis 13 durchzuführen.

15. Netzwerkknoten nach Anspruch 14, ferner umfassend:
- eine Kommunikationsschnittstelle; und
eine Verarbeitungsschaltung, die dazu konfiguriert ist, das Verfahren nach einem der Ansprüche 1 bis 13 durchzuführen.

## Revendications

1. Procédé exécuté par une fonction de gestion de session, SMF, pour fournir un accès à un réseau de données, DN, le procédé comprenant :
- l'enregistrement (702) d'un profil de fonction réseau, NF, pour la SMF, le profil NF comprenant un premier identifiant d'accès DN, DNAI, qui indique que la SMF a accès à un DN identifié par le premier DNAI.

2. Procédé selon la revendication 1, dans lequel le premier DNAI indique que la SMF prend en charge une fonction de plan utilisateur, UPF, qui prend en charge l'accès au DN.

3. Procédé selon l'une quelconque des revendications 1 à 2, comprenant en outre la réception (718), à partir d'une fonction d'accès et de mobilité, AMF, d'un message qui provoque l'insertion de la SMF pour une session d'unité de données de protocole, PDU, existante, le message comprenant le premier DNAI et, éventuellement,
le procédé comprenant en outre la sélection (724) d'une fonction de plan utilisateur, UPF, à l'aide du premier DNAI et, éventuellement,
le procédé comprenant en outre la réalisation d'une ou plusieurs actions de sorte que la SMF et l'UPF sélectionnée soient insérées pour la session PDU existante et, éventuellement,
dans lequel la réalisation des une ou plusieurs actions comprend la récupération (720) d'un contexte de gestion de session, SM, pour la session PDU existante à partir d'une seconde SMF contrôlant la session PDU.

4. Procédé selon la revendication 3, dans lequel la réalisation des une ou plusieurs actions comprend en outre la réception (722) du contexte SM à partir de la seconde SMF contrôlant la session PDU.

5. Procédé selon la revendication 3, dans lequel la session PDU existante est associée à un second DNAI qui identifie un second DN.

6. Procédé selon l'une quelconque des revendications 1 à 5, dans lequel le DN est un DN local.

7. Procédé exécuté par une fonction de gestion de session, SMF, pour prendre en charge la connexion à un réseau de données, DN, le procédé comprenant :
- l'obtention (704) d'une règle de fonction de contrôle de politique, PCF, pour utiliser un DN identifié par un premier identifiant d'accès DN, DNAI, pour une partie ou la totalité du trafic lorsqu'un équipement utilisateur, UE, se trouve dans une zone d'intérêt ;
- la réception (708) d'une notification indiquant qu'un UE particulier ayant une session d'unité de données de protocole, PDU, existante se trouve dans la zone d'intérêt ; et
- lors de la réception (708) de la notification indiquant que l'UE particulier se trouve dans la zone d'intérêt, la notification (712) à une fonction d'accès et de mobilité, AMF, que la SMF ne prend pas en charge le premier DNAI, déclenchant ainsi l'insertion d'une SMF intermédiaire, I-SMF, qui prend en charge l'accès au premier DNAI dans la session PDU existante de l'UE.

8. Procédé selon la revendication 7, comprenant en outre la détermination (712) que la SMF ne prend pas en charge le premier DNAI et/ou
le procédé comprenant en outre l'obtention (706) d'informations selon lesquelles l'UE particulier est soumis à la règle PCF et/ou
le procédé comprenant en outre l'abonnement (708) à un rapport d'événement de l'AMF pour la zone d'intérêt pour l'UE particulier, la réception (708) de la notification selon laquelle l'UE particulier se trouve dans la zone d'intérêt comprenant la réception (708) de la notification en réponse à l'abonnement (708) à un rapport d'événement de l'AMF pour la zone d'intérêt pour l'UE particulier.

9. Procédé selon l'une quelconque des revendications 1 à 8, dans lequel la SMF est une SMF d'un cœur de cinquième génération, 5GC.

10. Procédé exécuté par une fonction d'accès et de mobilité, AMF, pour identifier une fonction de gestion de session, SMF, avec accès à un réseau de données, DN, le procédé comprenant :
- la réception (712) d'une notification d'une première SMF contrôlant une session d'unité de données de protocole, PDU, d'un équipement utilisateur, UE, selon laquelle la première SMF ne prend pas en charge un identifiant d'accès DN, DNAI, souhaité pour la session PDU ; et
- la découverte (714) d'une seconde SMF prenant en charge le DNAI.

11. Procédé selon la revendication 10 comprenant en outre la notification (710) à la première SMF contrôlant la session PDU de l'UE que l'UE se trouve dans une zone d'intérêt dans laquelle un DN identifié par le DNAI doit être utilisé pour une partie ou la totalité du trafic de l'UE et/ou
dans lequel la découverte (714) de la seconde SMF prenant en charge le DNAI comprend l'interrogation d'une fonction de référentiel de fonction réseau, NRF, pour une SMF qui prend en charge le DNAI.

12. Procédé selon la revendication 10 ou 11 comprenant en outre la sélection (716) de la seconde SMF supportant le DNAI en tant que SMF intermédiaire, I-SMF, pour la session PDU et, éventuellement,
le procédé comprenant en outre, en réponse à la sélection (716) de l'I-SMF, la demande d'un contexte de gestion de session, SM, pour la session PDU.

13. Procédé selon l'une quelconque des revendications 10 à 12 dans lequel l'AMF est une AMF d'un cœur de cinquième génération, 5GC.

14. Nœud de réseau dans un système de communication (100), le nœud de réseau étant configuré pour exécuter le procédé selon l'une quelconque des revendications 1 à 13.

15. Nœud de réseau selon la revendication 14 comprenant en outre :
- une interface de communication ; et
un circuit de traitement configuré pour exécuter le procédé selon l'une quelconque des revendications 1 à 13.
